(19) Europäisches Patentamt
European Patent Office
Office européen des brevets

(11) **EP 1 747 566 B1**

(12) **EUROPÄISCHE PATENTSCHRIFT**

(45) Veröffentlichungstag und Bekanntmachung des Hinweises auf die Patenterteilung:
**30.05.2012 Patentblatt 2012/22**

(21) Anmeldenummer: 05745663.4

(22) Anmeldetag: **17.05.2005**

(51) Int Cl.:
*C22C 38/00* (2006.01)   *C22C 38/02* (2006.01)
*C22C 38/12* (2006.01)   *C22C 38/16* (2006.01)
*H01F 1/153* (2006.01)   *H01F 41/02* (2006.01)
*H01F 3/04* (2006.01)   *C22C 45/02* (2006.01)

(86) Internationale Anmeldenummer:
**PCT/EP2005/005353**

(87) Internationale Veröffentlichungsnummer:
**WO 2005/114682 (01.12.2005 Gazette 2005/48)**

(54) **STROMWANDLERKERN SOWIE HERSTELLVERFAHREN FÜR EINEN STROMWANDLERKERN**

CURRENT TRANSFORMER CORE AND METHOD FOR PRODUCING A CURRENT TRANSFORMER CORE

NOYAU DE TRANSFORMATEUR DE COURANT ET PROCEDE DE PRODUCTION D'UN NOYAU DE TRANSFORMATEUR DE COURANT

(84) Benannte Vertragsstaaten:
**DE ES FR**

(30) Priorität: **17.05.2004 DE 102004024337**

(43) Veröffentlichungstag der Anmeldung:
**31.01.2007 Patentblatt 2007/05**

(73) Patentinhaber: **Vacuumschmelze GmbH & Co. KG**
**63450 Hanau (DE)**

(72) Erfinder:
• **WULF, Günther**
  **63477 Maintal (DE)**

• **OTTE, Detlef**
  **63584 Gründau (DE)**
• **PETZOLD, Jörg**
  **63796 Kahl (DE)**

(74) Vertreter: **Schmuckermaier, Bernhard**
**Westphal, Mussgnug & Partner**
**Patentanwälte**
**Herzog-Wilhelm-Strasse 26**
**80331 München (DE)**

(56) Entgegenhaltungen:
**EP-A- 0 299 498    EP-A- 0 504 674**
**WO-A-01/27946    WO-A-03/007316**

**Beschreibung**

Die Erfindung betrifft einen Stromwandlerkern sowie ein Herstellverfahren für einen Stromwandlerkern.

Zur Erfassung des Energieverbrauchs elektrischer Geräte und Anlagen in Industrie und Haushalt werden Energiezähler eingesetzt. Dabei sind verschiedene Prinzipien bekannt, beispielsweise das des elektromechanischen Ferraris-Zählers, der auf der Messung der Rotation einer Scheibe basiert, die durch strom- bzw. spannungsproportionale Felder angetrieben wird.

Moderne Zähler arbeiten voll elektronisch. Die Stromerfassung basiert vielfach auf dem induktiven Prinzip, wobei Ausgangssignale von induktiven Strom- und Spannungswandlern digital verarbeitet werden und zur Verbrauchserfassung und dann zur Fernablesung zur Verfügung gestellt werden können.

Elektronische Energiezähler mit induktiven Stromwandlern werden zunehmend in Haushalten eingesetzt. Dabei spielt die kostengünstige Herstellbarkeit solcher Zähler teilweise eine noch größere Rolle als ihre technische Überlegenheit. Dies macht die Erschließung besonders wirtschaftlicher Herstellungsverfahren für derartige Stromwandler notwendig. Die zu messenden Verbraucherströme liegen im Bereich zwischen einigen mA und 100 A oder darüber, wobei eine eichfähige und präzise Energiemessung mit einem entsprechend geringen Fehler der Phase und Amplitude des Messsignals gegenüber dem zu messenden Primärstrom gefordert wird. Neben den Genauigkeitsanforderungen werden bei hohen Stückzahlen auch die Materialkosten für derartige Stromwandler, somit insbesondere auch die Kosten für das Wandlerkernmaterial wichtig.

Allgemein gilt für den Phasenfehler eines Stromwandlers

$$\tan \varphi \approx \frac{R_{Cu} + R_B}{\omega \cdot L} \cdot \cos \delta \qquad (1)$$

$R_B$ = Widerstand der Bürde;
$R_{Cu}$ = Widerstand der Sekundärwicklung  $\delta$ = Verlustwinkel des Wandlermaterials
L = Induktivität der Sekundärseite des Stromwandlers.

Für den Amplitudenfehler gilt

$$F(I) \approx -\frac{R_{Cu} + R_B}{\omega \cdot L} \cdot \sin \delta \qquad (2).$$

Die Induktivität L ist dabei definiert als

$$L = N_2{}^2 \cdot \mu' \cdot \mu_0 \cdot \frac{A_{Fe}}{l_{Fe}} \qquad (3)$$

$N_2$ = Sekundärwindungszahl
$\mu'$ = Permeabilität des Wandlermaterials (Realteil)
$\mu_0$ = allgemeine Permeabilitätskonstante
$A_{Fe}$ = Eisenquerschnitt des Kerns
$L_{Fe}$ = mittlere Eisenweglänge des Kerns.

Daher besteht für die Realisierung volumenmäßig kleiner und daher billiger, aber hochgenauer Stromwandler die Forderung nach Kernen mit möglichst hoher Permeabilität.

Zur Erfassung großer Ströme benötigt der Wandlerkern einen großen Innendurchmesser, was bei kleinem Eisenquerschnitt $A_{Fe}$ zu einem kleinen Verhältnis des Kernaußendurchmessers $D_a$ zu Kerninnendurchmesser $D_i$ von üblicherweise < 1,5 oder sogar < 1,25 führt. Derartig kleine Durchmesserverhältnisse führen allerdings zu einer hohen mechanischen Instabilität des Kerns und machen diesen empfindlich gegen jede Art von mechanischer Manipulation.

Aus den genannten Gründen werden als Materialien für derartige Stromwandlerkerne bisher hochpermeable Werkstoffe eingesetzt, beispielsweise Ferrite oder Permalloy-Werkstoffe. Dabei haben Ferrite jedoch den Nachteil, dass die Permeabilität vergleichsweise niedrig ist und relativ stark von der Temperatur abhängt. Permalloy-Werkstoffe besitzen die Eigenschaft, dass zwar ein niedriger Phasenfehler erreicht wird, dass dieser jedoch stark mit dem zu messenden Strom beziehungsweise der Aussteuerung des Magnetkernes variiert. Ein Ausgleich dieser Variation ist zwar durch eine entsprechende elektronische Beschaltung des Wandlers oder eine digitale Nachbearbeitung der Messwerte möglich, dies stellt jedoch zusätzlichen, kostenintensiven Aufwand dar. Wegen der Bruchempfindlichkeit der Ferrite sowie der hohen Magnetostriktion und niedrigen Sättigungsinduktion beider Materialklassen sind Wandlerkerne mit materialsparendem kleinen Eisenquerschnitt, d.h. kleinem Durchmesserverhältnis $D_a/D_i$, nicht realisierbar.

Es ist aus dem Stand der Technik, beispielsweise der EP 05 04674 B1 auch die Anwendung von hochpermeablen Magnetkernen aus nanokristallinen Werkstoffen mit hoher Sättigungsinduktion bekannt, die im Gegensatz zur vorgestellten Erfindung allerdings eine flache Hystereseschleife besitzen. Dadurch ergibt sich bei den damit erreichbaren Permeabilitäten ($\mu$ ca. 60.000 bis 120.000) der Zwang zur Dimensionierung von Stromwandlerkernen mit großem $A_{Fe}$. Trotz sonst guter Eigenschaften, insbesondere bezüglich des Phasenganges, wird dadurch ein wirtschaftlicher Einsatz in der Massenfertigung unmöglich.

In Wo 03/007316 A2 ist ein Durchlaufverfahren zur Kristallisation von Magnetkernen aus nanokristallinen Werkstoffen beschrieben, wobei in einem nachfolgenden Temperschritt mittels eines angelegten Magnetfeldes die Form der Hysteresenschleife der Magnetkerne einstellbar ist. Das Durchmesserverhältnis $D_a/D_i$ der mit diesem Verfahren hergestellten Magnetkerne wurde jedoch nicht verringert.

Der vorliegenden Erfindung liegt die Aufgabe zugrunde, einen über einen weiten Induktionsbereich sehr hochpermeablen, kostengünstigen Stromwandlerkern sowie ein Verfahren zur Herstellung eines solchen hochpermeablen Stromwandlerkernes anzugeben.

Die Aufgabe wird mit den Gegenständen der unabhängigen Patentansprüche gelöst. Vorteilhafte Weiterbildungen ergeben sich aus den abhängigen Patentansprüchen.

Erfindungsgemäss wird die Aufgabe durch die Bereitstellung von Stromwandlerkernen mit einem Verhältnis von Kernaußendurchmesser $D_a$ zu Kerninnendurchmesser $D_i$ < 1,25 gelöst, die eine Sättigungemagnetostriktion $\lambda_s \leq |4|$ ppm, eine runde Hystereseschleife mit $0,50 \leq Br/Bs \leq 0,85$ und einem $H_{cmax} \leq 20$ mA/cm aufweisen, wobei die Stromwandlerkerne aus einer weichmagnetischen Eisen-Basis-Legierung besteht, bei der mindestens 50% der Legierungsstruktur von feinkristallinen Teilchen mit einer mittleren Teilchengröße von 100 nm oder weniger eingenommen werden, und die Eisen-Basis-Legierung im wesentlichen folgende Zusammensetzung aufweist:

$$Fe_{x-a-b}CO_aNi_bCu_yM_zSi_vB_w$$

wobei M ein Element aus der Gruppe V, Nb, W, Ta, Zr, Hf, Ti, Mo oder eine Kombination aus diesen ist und zusätzlich gilt:

$x + y + z + v + w = 100\%$ mit
$Fe+Co+Ni = x = 100\%-y-z-v-w$

| | |
|---|---|
| Co | $a \leq 1, 5$ at % |
| Ni | $b \leq 1, 5$ at % . |
| Cu | $0,5 \leq y \leq 2$ at % |
| M | $z \leq 5$ at % |
| Si | $6, 5 \leq v \leq 18$ at % |
| B | $5 \leq w \leq 14$ at % |

wobei $v+w > 18$ at %. Unter dem Verhältnis Br/Bs wird hier das Verhältnis aus Remanenz Br und Sättigungsinduktion Bs verstanden.

Bevorzugt sind Stromwandlerkerne, mit einer Sättigungsmagnetostriktion $\lambda_s \leq |2|$ ppm, einer runden Hystereseschleife mit $0,50 \leq Br/Bs \leq 0,85$ und einem $H_{cmax} \leq 10$ mA/cm, wobei die Stromwandlerkerne aus einer weichmagnetischen Eisen-Basis-Legierung besteht, bei der mindestens 50% der Legierungsstruktur von feinkristallinen Teilchen mit einer mittleren Teilchengröße von 100 nm oder weniger eingenommen werden, und die Eisen-Basis-Legierung im wesentlichen folgende Zusammensetzung aufweist:

$$Fe_{x-a-b}CO_aNi_bCu_yM_2Si_vB_w$$

wobei M ein Element aus der Gruppe V, Nb, W, Ta, Zr, Hf, Ti, Mo oder eine Kombination aus diesen ist und zusätzlich gilt:

$x+y+z+v+w = 100 \%$ mit
$Fe+Co+Ni = x = 100\%-\gamma-z-v-w$

| Co | $a \leq 0,5$ at % |
| Ni. | $b \leq 0,5$ at % |
| Cu | $0,75 \leq y \leq 1,25$ at % |
| M | $2 \leq z \leq 3,5$ at % |
| Si | $13 \leq v \leq 16,5$ at % |
| B | $5 \leq w \leq 9$ at $\leq$ % |

wobei $20 \leq v+w \leq 25$ at %.

Besonders bevorzugt sind Stromwandlerkerne mit einer Sättigungsmagnetostriktion $\lambda_0 \leq |0,8|$ ppm, einer runden Hystereseschleife mit $0,65 \leq Br/Bs \leq 0,80$ und einem $H_{cmax} \leq 10$ mA/cm, wobei die Stromwandlerkerne aus einer weichmagnetischen Eisen-Basis-Legierung besteht, bei der mindestens 50% der Legierungsstruktur von feinkristallinen Teilchen mit einer mittleren Teilchengröße von 100 nm oder weniger eingenommen werden, und die Eisen-Basis-Legierung im wesentlichen folgende Zusammensetzung aufweist:

$$Fe_{x-a-b}CO_aNi_bCu_yM_z \, i_vB_w$$

wobei M ein Element aus der Gruppe V, Nb, W, Ta, Zr, Hf, Ti, Mo oder eine Kombination aus diesen ist und zusätzlich gilt:

x+y+z+ v+w = 100 % mit
Fe+Co+Ni = x = 100%-y-z-v-w

| Co | $a \leq 0,5$ at |
| Ni | $b \leq 0,5$ at % |
| Cu | $0,75 \leq y \leq 1,25$ at % |
| M | $2 \leq z \leq 3,5$ at % |
| Si | $13 \leq v \leq 16,5$ at % |
| B | $5 \leq w \leq 9$ at % |

wobei $20 \leq v+w \leq 25$ at %.

Typischerweise weisen die Stromwandlerkerne eine Permeabilität bei H = 4 mA/cm bei einer Frequenz von 50 Hz oder 60 Hz von $\mu 4 > 90.000$ auf und besitzen eine Maximalpermeabilität $\mu_{max} > 350.000$ bei einer Frequenz von 50 Hz oder 60 Hz. Ferner weisen die Stromwandlerkerne eine Sättigungsinduktion $B_s \leq 1,4$ Tesla auf. In bevorzugten Ausgestaltungen weisen die Stromwandlerkerne Permeabilitäten $\mu_1$ bei 1 mA/cm von $\mu_1 > 90.000$, weiter bevorzugt von $\mu_1 > 140.000$, und optimal von $\mu_1 > 180.000$ auf.

Solche Stromwandlerkerne eignen sich hervorragend für den Einsatz in einem Stromwandler mit einem Phasenfehler < 1°. Die Stromwandlerkerne sind dabei typischerweise als Ringbandkerne mit mindestens einer Primärwicklung und mindestens einer Sekundärwicklung ausgebildet.

Die Erfindung stellt des Weiteren ein Verfahren zur Herstellung von ringförmigen Stromwandlerkernen aus nanokristallinem Material mit runder Hystereseschleife bereit. Derzeit lassen sich derartige mechanisch hochempfindliche Kerne mit den bisher bekannten Verfahren, insbesondere Wärmebehandlung im Stapel im Retortenofen nicht technisch und wirtschaftlich befriedigend herstellen. Die Aufgabe wird erfindungsgemäß erfüllt durch ein Verfahren zur Herstellung von ringförmigen Stromwandlerkernen mit einem Verhältnis von Kernaußendurchmesser D, zu Kerninnendurchmesser $D_i < 1,5$, bestehend aus einer weichmagnetischen Eisen-Basis-Legierung, wobei mindestens 50% der Legierungsstruktur von feinkristallinen Teilchen mit einer mittleren Teilchengröße von 100 nm oder weniger eingenommen wird, mit folgenden Schritten:

a) Bereitstellen einer Legierungsschmelze;
b) Herstellung eines amorphen Legierungsbandes aus der Legierungsschmelze mittels Rascherstarrungstechnologie;
c) Spannungsfreies Wickeln des amorphen Bandes zu amorphen Stromwandlerkernen;
d) Wärmebehandlung der ungestapelten amorphen Stromwandlerkerne z.B. im Durchlauf zu nanokristallinen Stromwandlerkernen unter weitestgehendem Ausschluss des Einflusses von Magnetfeldern, wobei die ringförmigen Stromwandlerkerne mit einem Verhältnis von Kernaußendurchmesser $D_a$ zu Kerninnendurchmesser $D_i < 1,25$ hergestellt werden und die Wärmebehandlung in einem Temperaturintervall von ca. 440°C bis ca. 620°C vorgenommen wird und wobei bei der Wärmebehandlung in einem Temperaturintervall von ca. 440°C bis ca. 620°C eine erste Aufheizphase und eine zweite Aufheizphase existiert, deren Aufheizrate niedriger ist als die der ersten Aufheizphase.

Danach schließt sich typischerweise der Schrittverfestigung des Kerns z.B. durch Tränken, Beschichten, Umhüllen mit geeignetem Kunststoffmaterial und/oder Verkapselung an.

Damit lassen sich Stromwandlerkerne mit runden höchstpermeablen Hystereschleifen mit einem aufgrund der hohen Sättigungsinduktion von $B_s$ =1,1 bis 1,4 T weiträumig nutzbaren Induktionsbereich und einem guten Frequenzgang bezüglich der Permeabilität und vergleichsweise niedrigen Ummagnetisierungsverlusten herstellen.

Bei Stromwandlern werden bei den als "vorzugsweise" hervorgehobenen Legierungszusammensetzungen besonders gute Eigenschaften erreicht, da mit einer angepassten Wärmebehandlung bekanntlich ein Nulldurchgang der Sättigungsmagnetostriktion eingestellt werden kann.

Mit einem derartigen Magnetwerkstoff lassen sich vorteilhaft nanokristalline Kerne mit einer runden Hystereseschleife herstellen, bei denen das Verhältnis Br/Bs; das heißt die Remanenzflussdichte geteilt durch die Sättigungsflussdichte größer als 0,5 und bis zu 0,85 ist. Außerdem kann die Permeabilität $\mu_i$ > 100000 sein, $\mu$max > 350000 und es wird eine Sättigungsinduktion erreicht, die zwischen 1,1 T und 1,4 T liegen kann. Durch die hohe Anfangs- und Maximalpermeabilität und die hohe Sättigungsinduktion kann der Eisenquerschnitt und damit das Gewicht und der Preis des Wandlerkerns für die Massenfertigung wesentlich reduziert werden.

Nanokristalline weichmagnetische Eisen-Basis-Legierungen sind seit langer Zeit bekannt und wurden beispielsweise in der EP 0 271 657 B1 sowie in der WO 03/007316 A2 beschrieben.

In den beiden in der WO 03/007316 A2 beschriebenen Legierungssystemen werden mindestens 50% der Legierungsstruktur von feinkristallinen Teilchen mit einer mittleren Teilchengröße von 100 nm oder weniger eingenommen. Diese weichmagnetischen nanokristallinen Legierungen werden in zunehmendem Umfang als Magnetkerne in Induktivitäten für verschiedenste elektrotechnische Anwendungen eingesetzt. Dies geht beispielsweise aus der EP 0 299 498 B1 hervor.

Die in Rede stehenden nanokristallinen Legierungen können mittels der sogenannten Rascherstarrungstechnologie (beispielsweise mittels melt-spinning oder planar-flow-casting) hergestellt werden. Dabei wird zuerst eine Legierungsschmelze bereitgestellt, bei der anschließend durch rasches Abschrecken aus dem Schmelzzustand ein zunächst amorphes Legierungsband hergestellt wird. Die für die oben in Rede stehenden Legierungssysteme erforderlichen Abkühlgeschwindigkeiten betragen dabei etwa $10^6$ K/sec. Dies wird mit Hilfe des Schmelzspin-Verfahrens erreicht, bei welchem die Schmelze durch eine enge Düse auf eine schnell rotierende Kühlwalze gespritzt wird und dabei zu einem dünnen Band erstarrt. Dieses Verfahren ermöglicht die kontinuierliche Herstellung von dünnen Bändern und Folien in einem einzigen Arbeitsgang direkt aus der Schmelze mit einer Geschwindigkeit von 10 bis 50 m/sec., wobei Banddicken von 14 bis 50 $\mu$m und Bandbreiten bis zu einigen cm möglich sind.

Das mittels dieser Rascherstarrungstechnologie hergestellte zunächst amorphe Band wird dann zu geometrisch weiträumig variierbaren Magnetkernen gewickelt, wobei diese oval, rechteckig oder rund sein können.

Der zentrale Schritt zum Erreichen guter weichmagnetischer Eigenschaften ist die "Nanokristallisation" der bis dahin noch amorphen Legierungsbänder. Diese Legierungsbänder weisen aus weichmagnetischer Sicht noch schlechte Eigenschaften auf, da sie eine relativ hohe Magnetostriktion $|\lambda_5|$ von ca. 25 x $10^{-6}$ aufweisen. Bei der Durchführung einer auf die Legierung abgestimmten Kristallisationswärmebehandlung entsteht dann ein ultrafeines Gefüge, d. h. es entsteht eine Legierungsstruktur, bei der mindestens 50% des Volumens von kubisch raumzentrierten FeSi-Kristalliten eingenommen wird. Diese Kristallite sind in einer amorphen Restphase aus Metallen und Metalloiden eingebettet. Die festkörperphysikalischen Hintergründe für die Entstehung der feinkristallinen Struktur und die daher eingehende drastische Verbesserung der weichmagnetischen Eigenschaften ist beispielsweise in G. Herzer, IEEE Transactions on Magnetics, 25 (1989), Seiten 3327 ff. beschrieben. Danach entstehen gute weichmagnetische Eigenschaften wie eine hohe Permeabilität oder kleine Hystereseverluste durch Ausmittelung der Kristallanisotropie $K_1$ des zufallsorientierten nanokristallinen "Gefüges".

Nach dem aus der EP 0 271 657 B1 bzw. der EP 0 299 498 B1 bekannten Stand der Technik werden die amorphen Bänder zunächst auf speziellen Wickelmaschinen möglichst spannungsfrei zu Ringbandkernen gewickelt. Dazu wird das amorphe Band zunächst zu einem runden Ringbandkern gewickelt und - falls erforderlich - mittels geeigneter Formgebungswerkzeuge in eine von der runden Form abweichenden Form gebracht. Durch die Verwendung geeigneter Wickelkörper lassen sich jedoch auch direkt beim Wickeln der amorphen Bänder zu Ringbandkernen Formen erreichen, die von der runden Form abweichen.

Danach werden nach dem Stand der Technik die spannungsfrei gewickelten Ringbandkerne in sogenannten Retortenöfen einer Kristallisationswärmebehandlung unterworfen, die zur Erzielung des nanokristallinen Gefüges dient. Hierbei werden die Ringbandkerne übereinander gestapelt und in einen solchen Ofen eingefahren. Es hat sich gezeigt, dass ein entscheidender Nachteil dieses Verfahrens darin liegt, das durch schwache magnetische Streufelder, wie z. B. das magnetische Erdfeld eine Positionsabhängigkeit der Magnetwerte im Magnetkernstapel induziert wird. Während an den Stapelrändern beispielsweise hohe Permeabilitätswerte mit einem intrinsisch bedingten hohen Remanenzverhältnis von mehr als 60% vorliegen, sind die Magnetwerte im Bereich der Stapelmitte durch mehr oder weniger ausgeprägte flache Hystereseschleifen mit niedrigen Werten bezüglich der Permeabilität und Remanenz gekennzeichnet. Daneben kann eine an stromwandlerspezifischen Kernen insbesondere mit kleinem Verhältnis $D_a/D_i$ durchgeführte Stapelglühung zu beträchtlichen mechanischen Deformationen führen, die eine Verschlechterung der magnetischen Eigenschaften zur Folge haben.

Bei den in Rede stehenden nanokristallinen Legierungssystemen erfolgt die Einstellung des nanokristallinen Gefüges typischerweise bei Temperaturen von $T_a$ = 440°C bis 620°C, wobei die notwendigen Haltezeiten zwischen wenigen Minuten und ca. 12 Stunden liegen können. Insbesondere geht aus der US 5,911,840 hervor, dass bei nanokristallinen Magnetkernen mit einer runden B-H-Schleife eine Maximalpermeabilität von $\mu_{max}$ = 760.000 dann erreicht werden kann, wenn ein stationäres Temperaturplateau mit einer Dauer von 0,1 bis 10 Stunden unterhalb der für die Kristallisation erforderlichen Temperatur von 250°C bis 480°C zur Relaxation des Magnetkernes verwendet wird. Dies erhöht allerdings die Dauer der Wärmebehandlung und reduziert damit die Wirtschaftlichkeit.

Durch die erfindungsgemäße Vereinzelung der Stromwandlerkerne während der Wärmebehandlung wird eine identische magnetostatische Bedingung für jeden einzelnen Ringbandkern herbeigeführt. Dabei verhindert der im Gegensatz zum Kernstapel große Entmagnetisierungsfaktor des Einzelkerns ein Aufmagnetisieren in axialer Richtung. Die Folge dieser für jeden einzelnen Wandlerkern identischen magnetostatischen Kristallisationsbedingung ergibt eine Beschränkung der Magnetwert-Streuungen auf legierungsspezifische, geometrische und/oder thermische Ursachen. Stapelbedingte Feldbündelungen können so ausgeschlossen werden.

Zur Minimierung magnetoelastischer Anisotropien, die zu einer Absenkung der Permeabilität führen würden, wird die Wärmebehandlung mit den Legierungszusammensetzungen so abgestimmt, dass die Magnetostriktionsbeiträge von feinkristallinem Korn und amorpher Restphase einander ausgleichen und somit eine minimierte Magnetostriktion von $\lambda_s$ < 2 ppm, vorzugsweise sogar < 0,8 ppm erreicht wird. Andererseits erlaubt das beschriebene Durchlaufverfahren im Gegensatz zur Stapelglühung im Retortenofen ein spannungsfreies Glühen der Kerne. Letzteres ist gerade bei den hier betrachteten zumeist mechanisch instabilen Stromwandlerkernen mit kleinem Durchmesserverhältnis $D_a/D_i$ von großem Vorteil. Dies reduziert, einerseits die magnetomechanischen Anisotropien weiter, andererseits behalten die Kerne trotz geringer mechanischer Stabilität ihre ursprüngliche, meist runde Form. Weiterhin ist es wichtig, dass bei dem kontinuierlichen Durchlaufprozess, den die einzelnen Stromwandlerkerne durchlaufen, keine Berührung untereinander oder mit weiteren Teilen stattfindet, die eine Verformung oder Verspannung zur Folge haben könnte, und dass andererseits eine Schutzgasatmosphäre realisiert wird, die dazu führt, dass eine Oberflächenoxidation oder -kristallisation verhindert wird. Zu diesem Zweck kann eine reduzierende Gasatmosphäre, insbesondere mit einem trockenen Gas vorgesehen sein.

Um die anwendungsbedingten Anforderungen an einen kleinen Imaginärteil der komplexen Permeabilität zu erfüllen, was im Zusammenhang mit der Herabsetzung der Ummagnetisierungsverluste notwendig ist, hat es sich als vorteilhaft erwiesen, dass das amorphe Band vor dem Wickeln elektrisch isolierend beschichtet wird. Dies führt zu einem kleinen Verlustwinkel δ und damit zur Minimierung des Amplitudenfehlers in Gleichung (2).

Je nach Anforderung kann die Beschichtung wahlweise durch ein Tauch-, Durchlauf-, Sprüh- oder Elektrolyseverfahren geschehen. Es kann auch vorgesehen sein, dass der Stromwandlerkern nach dem Wickeln in ein Isolationsmittel getaucht wird.

Das isolierende Medium ist so zu wählen, dass dieses einerseits auf der Bandoberfläche gut haftet, andererseits keine Oberflächenreaktionen verursacht, die zu einer Schädigung der Magneteigenschaften führen könnten. Im Zusammenhang mit dem vorliegenden Legierungssystem haben sich Oxide, Acrylate, Phosphate, Silikate und Chromate der Elemente Ca, Mg, Al, Ti, Zr, Hf, Si bewährt.

Als besonders vorteilhaft hat es sich herausgestellt, ein flüssiges magnesiumhaltiges Vorprodukt auf die Bandoberfläche aufzubringen, welches sich während einer speziellen, die Legierung nicht beeinflussenden Wärmebehandlung in eine dichte Schicht aus Magnesiumoxid umwandelt, deren Dicke ungefähr zwischen 30 nm und 1 mm liegen kann und die fest auf der Bandoberfläche haftet.

Nach der Wärmebehandlung wird der Magnetkern schließlich verfestigt, z.B. durch Tränken, Beschichten, Umhüllen mit geeigneten Kunststoffmaterialien und / oder Verkapselung.

Bei der Verkapselung z.B. durch Einkleben in Schutztröge muss auf verspannungsbedingte Variation der Amplituden- und Phasenfehler mit der Temperatur geachtet werden. Bei der Verwendung eines weichelastischen Klebstoffes zeigte sich, dass eine Temperaturänderung sowohl zu gegenüber Raumtemperatur hohen als auch zu tiefen Temperaturen zu zusätzlichen Linearitätsabweichungen der Wandlerfehler führt. Hier treten Zug-und Druckspannungen am Kern auf, die sich wegen des elastischen Verhaltens des ausgehärteten Klebstoffs vom Trogmaterial her übertragen. Eine deutliche Verringerung dieses Effektes konnte dadurch realisiert werden, dass als Füllmasse anstelle eines weichelastischen Reaktionsklebstöffs eine weichplastische, nicht reaktive Paste verwendet wurde. Damit konnten die Linearitätswerte innerhalb des Temperaturbereichs von -40°C bis +85 °C nahezu konstant gehalten werden.

Die Erfindung bezieht sich außer auf das Verfahren zur Herstellung von Stromwandlerkernen gemäß Patentanspruch 1 auch auf die nach diesem Verfahren hergestellten Stromwandlerkerne für Stromwandler mit einem Phasenfehler < 1°.

Es hat sich herausgestellt, dass durch die beschriebene Temperaturbehandlung mit den ebenfalls beschriebenen Umgebungsbedingungen und mit dem angegebenen Legierungssystem besonders kleine Phasenfehler bei Stromwandlern mit den so hergestellten Stromwandlerkernen realisiert werden können.

Dazu müssen bei Herstellung eines Stromwandlers jeweils noch eine Primär- und eine Sekundärwicklung vorgesehen werden.

Zusammenfassend sind zur Erreichung einer runden Hystereseschleife bei hoher Anfangs- und Maximalpermeabilität beziehungsweise einem geringen Koerzitivfeld ($H_c$ < 15 mA/cm) folgende Bedingungen wichtig beziehungsweise vorteilhaft, insbesondere um nach der Wärmebehandlung keine Anisotropien mit Anisotropieenergien $K_{ges}$ > 2 J/m$^3$ zu erzeugen:

I. Externe Magnetfelder während der Wärmebehandlung müssen verhindert werden, auch solche; die durch Flussbündelung des Erdmagnetfeldes entstehen

II. Vermeidung von Verspannungen innerhalb des Bandmaterials, zum Beispiel durch Oberflächenoxidation oder Kristallisation

III. Vermeidung von Verspannungen während der Wärmebehandlung innerhalb des Kerns oder von außen auf den Kern durch verspannungsfreies Wickeln, Aufsetzen zum Glühen und Abgleich der Magnetostriktion im Wärmebehandlungsverfahren

IV. Vermeidung von Verspannungen beim Verfestigen.

V. Vermeidung von Verspannungen beim Einsatz der Stromwandlerkerne, das heißt beim Bewickeln und beim Einbau in Stromwandler.

Durch das erfindungsgemäße Verfahren ist die Fertigung von mechanisch instabileren Wandlerkernen möglich, die ein Verhältnis von Kernaußendurchmesser zu Kerninnendurchmesser < 1,5 insbesondere sogar < 1,25 aufweisen. Derartige Wandlerkerne lassen sich mit herkömmlichen Methoden, besonders wenn sie während der Wärmebehandlung gestapelt werden, nicht herstellen, da sie leicht, beispielsweise bei der Manipulation oder dem Transport in den Ofen, beschädigt werden oder innere Spannungen aufbauen.

Beim Kristallisationsprozess, d.h. während der beschriebenen Wärmebehandlung, muss berücksichtigt werden, dass es sich um eine exotherme Reaktion handelt und dass die frei werdende Kristallisationswärme vom Kern abgeführt werden muss. Vorzugsweise wird die Wärmebehandlung der ungestapelten amorphen Ringbandkerne auf Wärmesenken durchgeführt, die eine hohe Wärmekapazität und eine hohe Wärmeleitfähigkeit aufweisen. Das Prinzip der Wärmesenke ist schon aus der JP 03 146 615 A2 bekannt. Allerdings werden dort nur bei stationären Glühungen Senken eingesetzt. Dabei kommen als Material für die Wärmesenken insbesondere ein Metall oder eine metallische Legierung in Betracht. Insbesondere die Metalle Kupfer, Silber sowie wärmeleitfähiger Stahl haben sich als besonders geeignet erwiesen.

Es ist jedoch auch möglich, die Wärmebehandlung auf einer Wärmesenke aus Keramik durchzuführen. Des Weiteren ist auch eine Ausgestaltung der vorliegenden Erfindung denkbar, bei dem die mit Wärme zu behandelnden amorphen Ringbandkerne in ein Formbett aus Keramikpulver oder Metallpulver, vorzugsweise Kupferpulver eingebracht sind.

Als Keramikmaterialien, sowohl für eine massive Keramikplatte bzw. für ein Keramikpulverbett, haben sich insbesondere Magnesiumoxid, Aluminiumoxid und Aluminiumnitrid als besonders geeignet erwiesen.

Die Wärmebehandlung zur Kristallisation wird in einem Temperaturintervall von ca. 450°C bis ca. 620°C durchgeführt. Dabei untergliedert sich der Ablauf normalerweise in verschiedene Temperaturphasen zur Einleitung des Kristallisationsvorganges und zur Reifung des Gefüges, d.h. zum Abgleich der Magnetostriktion.

Die erfindungsgemäße Wärmebehandlung wird vorzugsweise mit einem Ofen durchgeführt, wobei der Ofen ein Ofengehäuse, das zumindest eine Glühzone und eine Heizquelle, Mittel zur Beschickung der Glühzone mit ungestapelten amorphen Magnetkernen, Mittel zur Beförderung der ungestapelten amorphen Magnetkerne durch die Glühzone und Mittel zur Entnahme der ungestapelten wärmebehandelten nanokristallinen Magnetkerne aus der Glühzone aufweist.

Vorzugsweise wird die Glühzone eines solchen Ofens mit einem Schutzgas beaufschlagt.

In einer ersten Ausführungsform der vorliegenden Erfindung weist dabei das Ofengehäuse die Gestalt eines Turmofens auf, bei dem die Glühzone vertikal verläuft. Die Mittel zur Beförderung der ungestapelten amorphen Magnetkerne durch die vertikal verlaufende Glühzone sind dabei vorzugsweise ein vertikal verlaufendes Förderband.

Das vertikal verlaufende Förderband weist dabei senkrecht zur Förderbandfläche stehende Auflagen aus einem Material mit hoher Wärmekapazität, d. h. also entweder aus den eingangs beschriebenen Metallen oder den eingangs beschriebenen Keramiken auf, die eine hohe Wärmekapazität und hohe Wärmeleitfähigkeit aufweisen. Die Ringbandkerne liegen dabei auf den Auflagen auf.

Die vertikal verlaufende Glühzone ist dabei vorzugsweise in mehrere separate Heizzonen unterteilt, die mit separaten Heizregelungen versehen sind.

In einer alternativen Ausführungsform des erfindungsgemäßen Ofens weist dieser die Gestalt eines Turmofens auf, bei dem die Glühzone horizontal verläuft. Dabei ist die horizontal verlaufende Glühzone wiederum in mehrere separate Heizzonen unterteilt, die mit separaten Heizregelungen versehen sind. Als Mittel zur Beförderung der ungestapelten amorphen Ringbandkerne durch die horizontal verlaufende Glühzone ist dann zumindest eine, vorzugsweise aber mehrere, sich karussellartig um die Turmofenachse drehende Auflageplatten vorgesehen.

Die Auflageplatten, auf denen die Wandlerkerne aufliegen, bestehen wiederum ganz oder teilweise aus einem Material mit hoher Wärmekapazität und hoher Wärmeleitfähigkeit. Hierbei kommen insbesondere Platten in Betracht, die aus den eingangs erwähnten Metallen, wie z.B. Kupfer, Silber oder wärmeleitfähigem Stahl oder aus Keramiken bestehen.

In einer dritten alternativen Ausführungsform des Ofens weist dieser ein Ofengehäuse auf, das die Gestalt eines horizontalen Durchlaufofens aufweist, bei dem die Glühzone wiederum horizontal verläuft. Diese Ausführungsform ist besonders bevorzugt, weil ein solcher Ofen relativ einfach herzustellen ist.

Dabei ist als Mittel zur Beförderung der ungestapelten amorphen Wandlerkerne durch die horizontal verlaufende Glühzone ein Förderband vorgesehen, wobei das Förderband vorzugsweise wiederum mit Auflagen versehen ist, die aus einem Material mit hoher Wärmekapazität und hoher Wärmeleitfähigkeit bestehen, auf denen die Ringbandkerne aufliegen. Hierbei kommen wiederum die eingangs diskutierten metallischen und/oder keramischen Materialien in Betracht.

Typischerweise ist auch hier wiederum die horizontal verlaufende Glühzone in mehrere separate Heizzonen unterteilt, die mit separaten Heizregelungen versehen sind.

Die Erfindung ist im folgenden anhand der Zeichnung beispielsweise veranschaulicht. Dabei zeigen:

| | |
|---|---|
| Figur 1 | schematisch im Querschnitt einen Turmofen mit vertikal laufendem Förderband, |
| Figur 2 | einen mehrstöckigen Karussellofen, |
| Figur 3 | einen Durchlaufofen mit horizontal verlaufendem Förderband, |
| Figur 4 | schematisch einen Stromwandler, |
| Figur 5 | das Ersatzschaltbild eines Stromwandlers, |
| Figur 6 | das Phasenverhalten eines erfindungsgemäßen Wandlerkerns, |
| Figur 7 | eine Übersicht über die Permeabilitätseigenschaften von Wandlerkernen aus verschiedenen Magnetwerkstoffen, nach unterschiedlicher Wärmebehandlung, |
| Figuren 8a, 8b, 8c | den Zustand stromwandlertypischer Ringbandkerne mit kleinem Verhältnis $D_a/D_i$ nach einer Durchlaufglühung (8a) und nach Stapelglühungen ohne (8b) und mit Magnetfeld (8c) und |
| Figur 9a und 9b | Amplituden- und Phasenfehler von mit aus unterschiedlichen Materialien bestehenden Wandlerkernen aufgebauten Stromwandlern. |

Insbesondere zur Herstellung von sogenannten runden Hystereseschleifen werden Glühverfahren benötigt, die die Entstehung und Reifung von einem ultrafeinen nanokristallinen Gefüge unter möglichst feldfreien und thermisch exakten Bedingungen erlauben. Wie eingangs erwähnt, wird nach dem Stand der Technik normalerweise die Glühung in sogenannten Retortenöfen ausgeführt, in die die Wandlerkerne übereinander gestapelt eingefahren werden.

Der entscheidende Nachteil dieses Verfahrens ist, dass durch schwache Streufelder wie z. B. das magnetische Feld der Erde oder ähnliche Streufelder eine Positionsabhängigkeit der magnetischen Kennwerte im Magnetkernstapel durch Feldlenkungs-und Bündelungseffekte induziert wird.

Neben den magnetostatischen Effekten besitzt die Stapelglühung in Retortenöfen den weiteren Nachteil, dass mit zunehmendem Magnetkerngewicht die exotherme Wärme des Kristallisationsprozesses nur unvollständig an die Umgebung abgegeben werden kann. Die Folge ist eine Überhitzung der gestapelten Magnetkerne, die zu niedrigeren Permeabilitäten und zu hohen Koerzitivfeldstärken führen kann. Zur Umgehung dieser Probleme muss im Bereich der einsetzenden Kristallisation, d. h. also ab ca. 450°C sehr langsam aufgeheizt werden, was unwirtschaftlich ist. Typische Aufheizraten liegen dort bei 0,1 bis 0,2 K/min, wodurch alleine das Durchfahren des Bereiches bis 490°C bis zu 7 Stunden betragen kann.

Die einzige wirtschaftlich realisierbare großtechnische Alternative zur Stapelglühung im Retortenofen liegt in einer Glühung einzelner separater Wandlerkerne im Durchlauf. Durch die Vereinzelung der Wandlerkerne durch das Durchlaufverfahren werden identische magnetostatische und thermische Bedingungen für jeden einzelnen Wandlerkern geschaffen.

Die für Durchlaufglühungen typische schnelle Aufheizrate kann selbst bei vereinzelten Magnetkernen zu einer exothermen Wärmeentwicklung führen, die eine mit dem Kerngewicht zunehmende Schädigung der Magneteigenschaften verursacht. Diesem Effekt könnte durch eine langsamere Aufheizung entgegengewirkt werden.

Da aber eine verzögerte Aufheizung zu einer unwirtschaftlichen Vervielfachung der Länge der Durchlaufstrecke führen würde, kann dieses Problem durch die Einführung wärmeabsorbierender Unterlagen (Wärmesenken) aus gut wärmeleitenden Metallen oder durch metallische oder keramische Pulverbetten gelöst werden. Als besonders geeignet haben sich Kupferplatten erwiesen, da diese eine hohe spezifische Wärmekapazität und eine sehr gute Wärmeleitfähigkeit besitzen. Dadurch kann den Magnetkernen die exotherm erzeugte Kristallisationswärme stirnseitig entzogen werden. Darüber hinaus reduzieren derartige Wärmesenken die tatsächliche Aufheizrate der Kerne, wodurch die exotherme Übertemperatur weiter eingeschränkt werden kann.

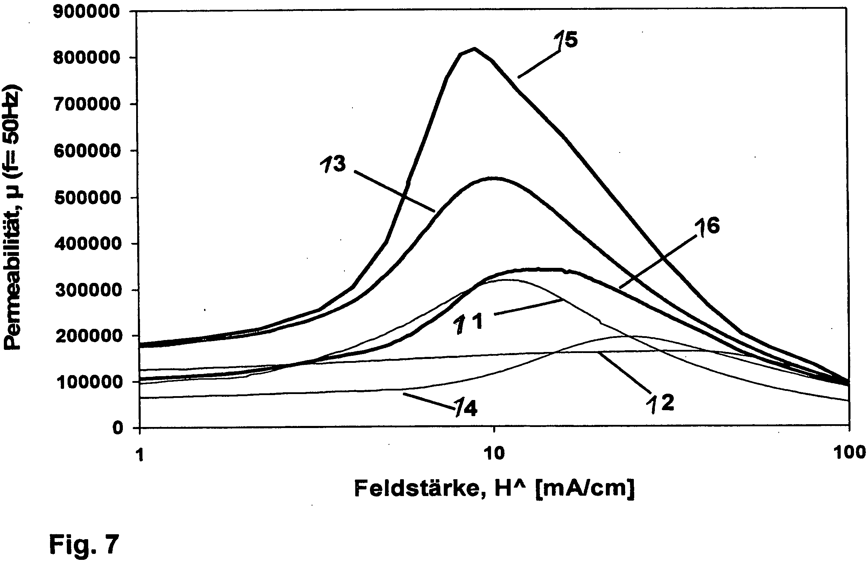

Die Wärmekapazität der Wärmesenke ist beispielsweise durch Variation der Plattendicke an die Masse und Höhe der Kerne anzupassen. Bei optimaler Anpassung lassen sich so über einen weiten Gewichtsbereich hinweg hervorragende magnetische Kennwerte ($\mu_{max}$ (50 Hz) > 350000; $\mu_4$ > 90000) erzielen. Bei erfindungsgemäßer Herstellung sind diese gemäß Fig. 7 den bisherigen Stromwandlerkernen aus NiFe oder aus nanokriställinem Material mit flacher Schleife weit überlegen.

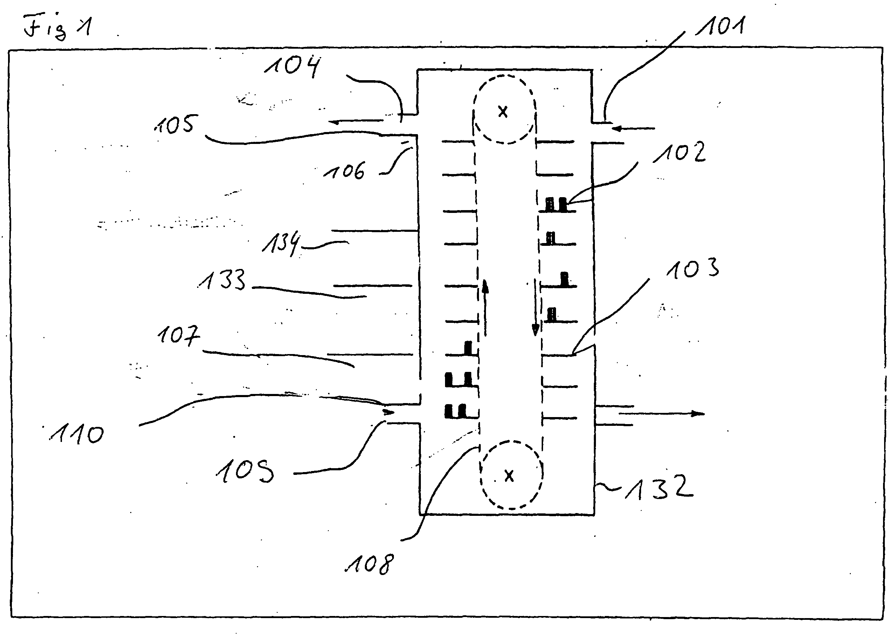

Die Figur 1 zeigt schematisch einen Turmofen zur Durchführung der erfindungsgemäßen Wärmebehandlung. Der Turmofen weist dabei ein Ofengehäuse auf, bei dem die Glühzone vertikal verläuft. Die ungestapelten amorphen Wandlerkerne werden dabei durch eine vertikal verlaufende Glühzone durch ein vertikal verlaufendes Förderband gefördert.

Das vertikal verlaufende Förderband weist dabei senkrecht zur Förderbandfläche stehende Wärmesenken aus einem Material mit hoher Wärmekapazität, vorzugsweise Kupfer, auf. Die Wandlerkerne liegen dabei mit ihren Stirnflächen auf den Auflagen auf. Die vertikal verlaufende Glühzone ist dabei in mehrere separate Heizungen unterteilt, die mit separaten Heizregelungen versehen sind.

Im Einzelnen sind in der Figur 1 dargestellt: Glühgutentnahme 104, Schutzgasschleusen 105, 110, Glühgutbeschickung 109, Aufheizzone mit reduzierendem oder passivem Schutzgas 107, Kristallisationszone 133, Aufheizzone 134, Reifungszone 106, Förderband 108, Ofengehäuse 132, Auflagefläche 103 als Wärmesenke für die Wandlerkerne 102, Schutzgasschleuse 101.

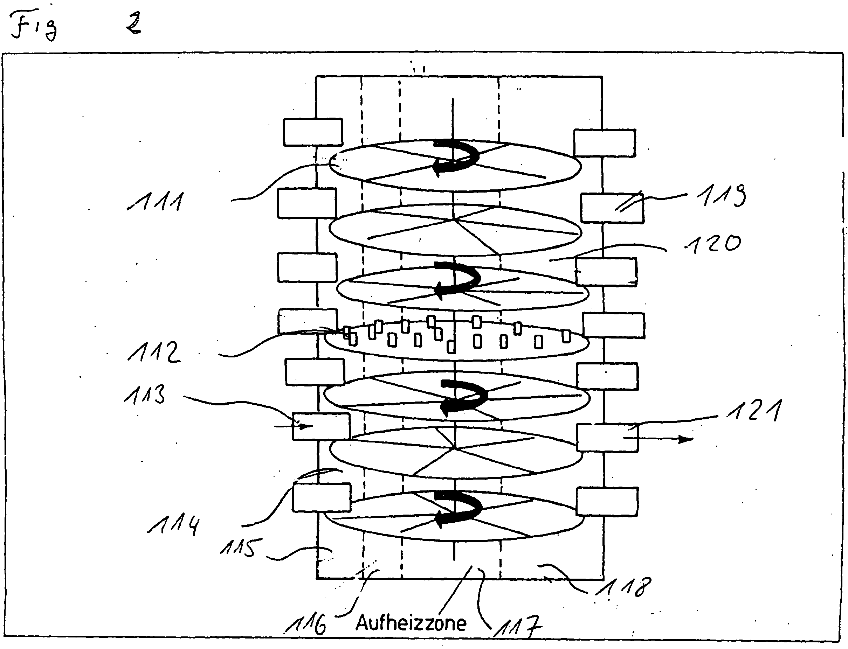

In der Figur 2 ist eine weitere Ausführungsform eines derartigen Ofens dargestellt. Auch hier ist wiederum die Gestalt des Ofens die eines Turmofens, bei dem die Glühzone jedoch horizontal verläuft. Dabei ist die horizontal verlaufende Glühzone wiederum in mehrere separate Heizzonen unterteilt, die mit separaten Heizregelungen versehen sind. Als Mittel zur Beförderung der ungestapelten amorphen Ringbandkerne durch die horizontal verlaufende Glühzone ist wiederum eine, vorzugsweise aber mehrere sich um die Turmofenachse drehende Auflagenplatten vorgesehen, die als Wärmesenken dienen.

Die Auflageplatten wiederum bestehen ganz oder teilweise aus einem Material mit hoher Wärmekapazität und hoher Wärmeleitfähigkeit, auf dem die Magnetkerne mit ihren Stirnflächen aufliegen.

In der Figur 2 sind im Einzelnen ersichtlich: Rotierende Auflagefläche als Wärmesenke 111, Wandlerkerne 112, Glühgutbeschickung 113, Glühzone mit reduzierendem oder passivem Schutzgas 114, Aufheizzone 115, Kristallisationszone 116, Aufheizzone 117, Reifungszone 118, Glühgutentnahme 121, Aufheizraum mit reduzierendem oder passivem Schutzgas 120, Schutzgasschleuse 119.

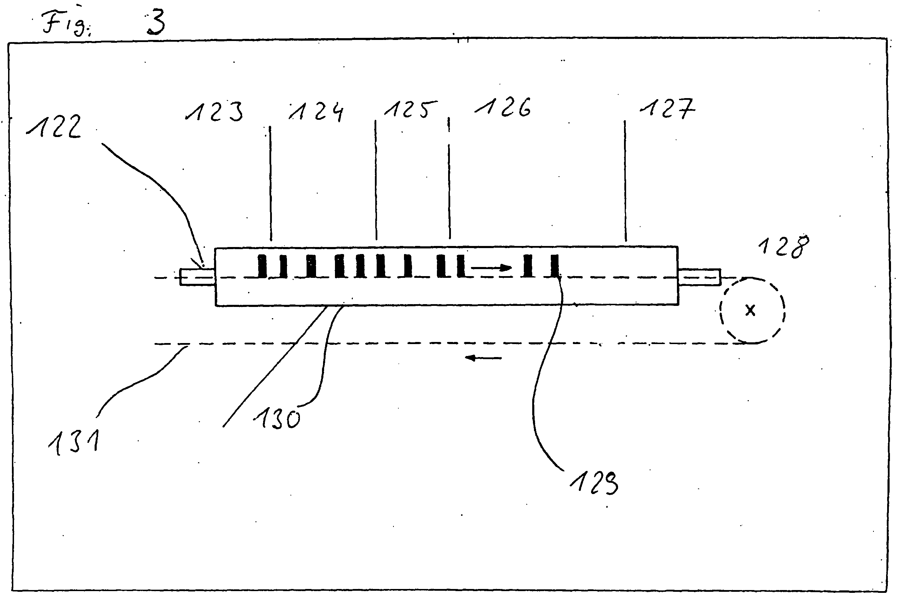

Die Figur 3 schließlich zeigt eine dritte Ausführungsform eines Ofens, bei der das Ofengehäuse die Gestalt eines horizontalen Durchlaufofens aufweist. Dabei verläuft die Glühzone wiederum horizontal. Diese Ausführungsform ist besonders bevorzugt, weil ein solcher Ofen im Gegensatz zu den beiden oben genannten Öfen mit weniger Aufwand herzustellen ist.

Dabei werden die als Ringbandkerne ausgeführten Wandlerkerne durch die horizontal verlaufende Glühzone über ein Förderband gefördert, wobei das Förderband vorzugsweise wiederum mit Auflagen versehen ist, die als Wärmesenken dienen. Besonders bevorzugt sind hier wiederum Kupferplatten. In einer alternativen Ausgestaltung des Transportes werden Platten als Wärmesenken genommen, die auf Rollen durch das Ofengehäuse gleiten.

Wie aus der Figur 3 hervorgeht, ist die horizontal verlaufende Glühzone wiederum in mehrere separate Heizzonen unterteilt, die mit separaten Heizregelungen versehen sind.

In der Figur 3 sind im Einzelnen dargestellt: Spülzone mit passivem Schutzgas 122, Aufheizzone 123, Kristallisationszone 124, Aufheizzone 125, Reifungszone 126, Abkühlzone 127, Spülzone mit passivem Schutzgas 128, Wandlerkerne 129, Glühzone mit Schutzgas 130, Förderband 131.

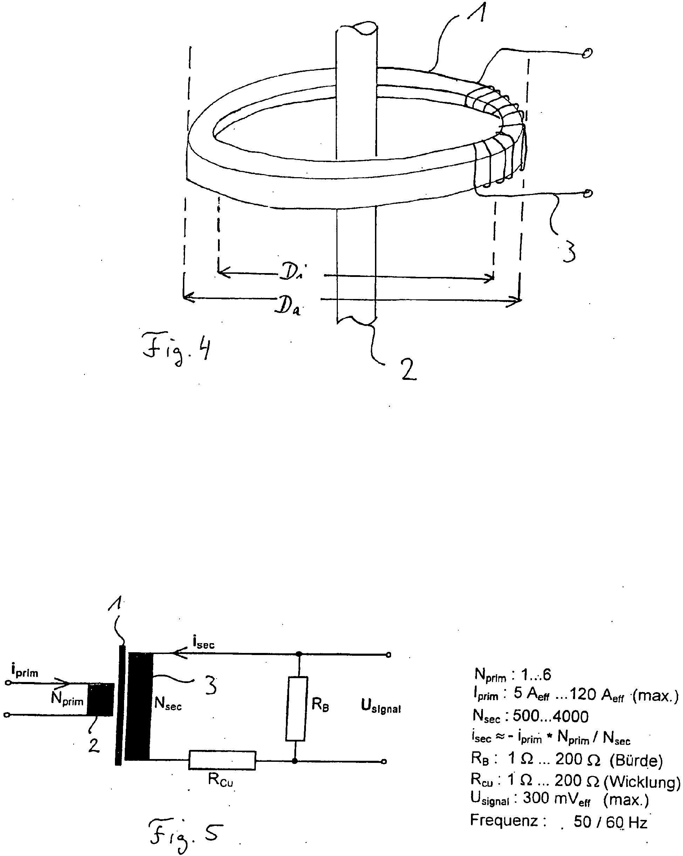

Figur 4 zeigt schematisch einen Stromwandler mit einem Wandlerkern 1, einem Primärstromleiter 2 sowie einem in Form einer Spule auf den Wandlerkern aufgewickelten Sekundärleiter 3. Der Wandlerkern 1 ist als Kreisring ausgebildet und weist die in der Figur dargestellten Durchmesser $D_a$ (Außendurchmesser) und $D_i$ (Innendurchmesser) auf. Dabei beziehen sich $D_a$ und $D_i$ auf das Magnetmaterial des Kerns. Wie bereits weiter oben beschrieben, zeichnen sich Stromwandlerkerne durch kleine Verhältnisse Da/Di aus, wobei gilt Da/Di < 1,5 oder sogar < 1,25. Wandlerkerne, die wie hier aus nanokristallinem Material mit derartig kleinen Durchmesserverhältnissen hergestellt sind, lassen sich nur mit dem erfindungsgemäßen Wärmebehandlungsverfahren ohne Verspannungen und / oder Deformationen herstellen.

Der Primärleiter 2 kann einerseits als ein den Wandlerkern durchsetzender einzelner Leiter ausgebildet sein, andererseits jedoch alternativ auch als eine Wicklung ähnlich der Wicklung des Sekundärleiters 3.

In der Figur 5 ist das Ersatzschaltbild für einen in der Figur 4 dreidimensional dargestellten Stromwandler gezeigt, wobei gleiche Bezugzeichen gleiche Elemente bezeichnen.

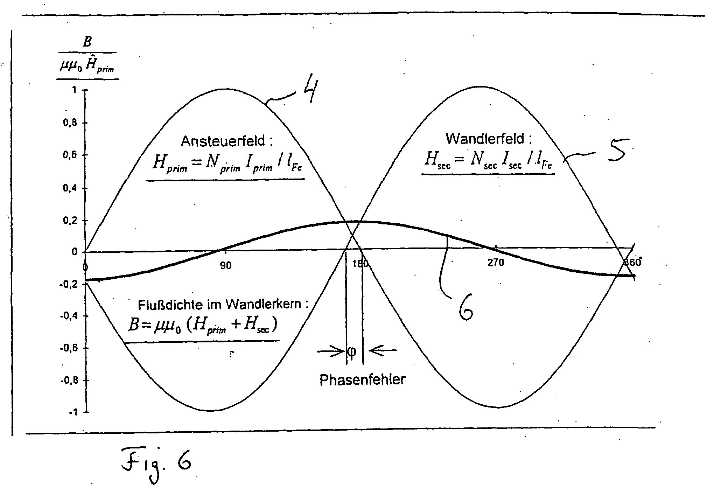

Die Figur 6 zeigt in einer ersten Kurve 4 die Feldstärke des Primärfeldes $H_{prim}$. Eine zweite Kurve 5 zeigt das induzierte Gegenfeld oder Wandlerfeld $H_{sek}$ und die dritte Kurve 6 zeigt die Flussdichte B im Wandlerkern.

In der Figur ist außerdem der Phasenfehler φ, sowie die Winkeldifferenz zwischen $H_{Prim}$ und $-H_{Sek}$ eingezeichnet.

Nachfolgend werden einige ausgewählte Ausführungsbeispiele dargestellt, die die Erfindung gegenüber dem Stand der Tech nik verdeutlichen sollen, wobei die Beispiele 1 und 2 keine Ausführungsbeispiele der Erfindung sind, sondern Vergleichsbeispiele, die das Verständnis der Erfindung erleichtern:

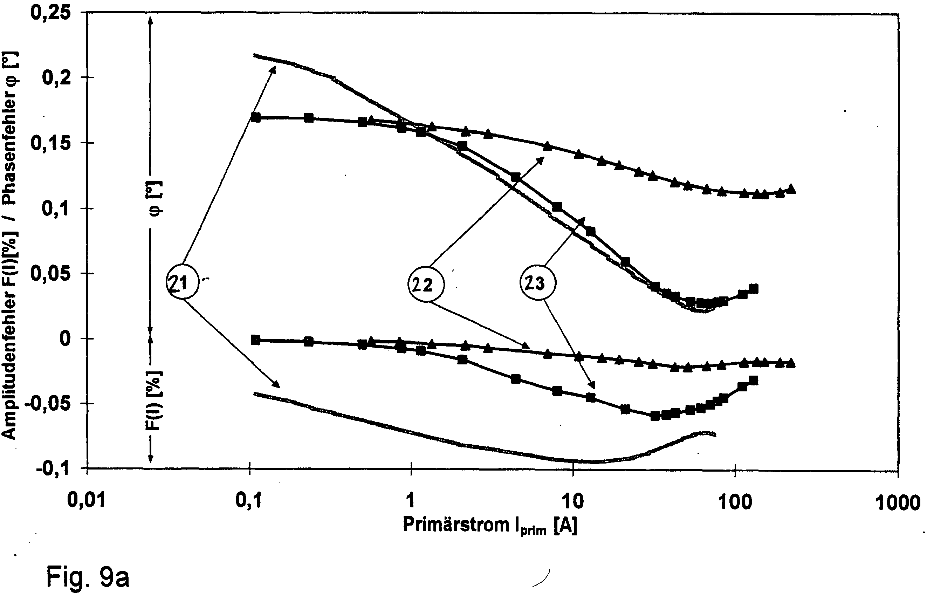

Beispiel 1: Aus Permalloy wurde gemäß dem Stand der Technik ein Wandlerkern der Abmessung 22 x 16 x 5,5 mm mit Füllfaktor 87 % und einem Gewicht von 7,45 g hergestellt. Die aus Fig. 7 (Kurve 11) abzulesende Permeabilität lag bei $\mu$4 = 170.000. Gemäß Fig. 9a (Kurve 21) wurde bei einer Primärwindungszahl von 1 und einer Sekundärwindungszahl von 2500 und einem Bürdewiderstand von 12,5 Ω bei Nennstrom 60 A nur in einem stark begrenzten Strombereich dieselbe Genauigkeit erzielt wie mit dem erfindungsgemäßen Beispiel 3: Der maximal abbildbare Strombereich lag aufgrund der niedrigeren Sättigungsinduktion von 0,74 T nur bei 75 A; für Ströme unterhalb von 1 A stieg der Phasenfehler φ gegenüber dem Beispiel 3 in unakzeptabler Weise an.

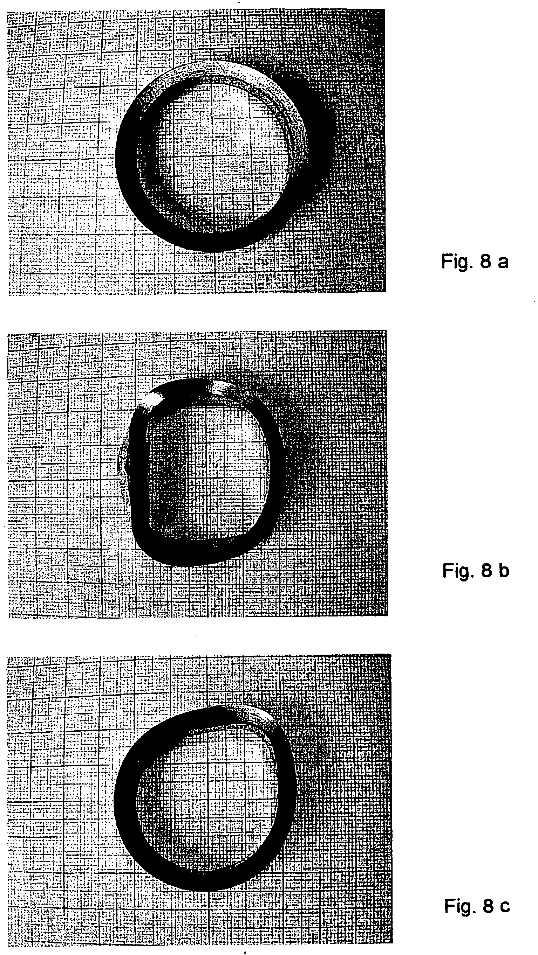

Beispiel 2: Aus der Legierung $Fe_{75,5}Cu_1Nb_3Si_{12,5}B_8$ wurde ein Kern der Abmessung 47 x 38 x 5 mm (Füllfaktor 80 %) gewickelt. Die Wärmebehandlung wurde per Stapelglühung in einem Retortenofen durchgeführt, wobei die Gefügereifung und der Abgleich der Magnetostriktion für 1 Stunde bei 567°C erfolgte. Anschließend folgte eine 3-stündige Wärmebehandlung bei 422°C unter Querfeld. Allerdings wurde zur Vermeidung einer exothermen Überhitzung zwischen 430 °C und 500°C extrem langsam mit 0,1 °C/min aufgeheizt. Dadurch dauerte die gesamte in $H_2$ durchgeführte Wärmebehandlung ca. 19 Stunden und war sehr unwirtschaftlich. Aufgrund der Kraftwirkung während der Glühung erhielt der Kern eine Form wie in Fig. 8c dargestellt. Die Permeabilität war aufgrund des dem Stand der Technik entsprechenden Querfeldes, aber auch wegen der mechanischen Schädigung durch die Feldkräfte relativ niedrig und lag gemäß Fig. 7 (*Kurve 12*) bei $\mu_4$ = 140.000. Gemäß Fig. 9a (*Kurve 22*) war dieser Kern weiträumig schlechter als der kristalline Stand der Technik und wurde verworfen, da der Phasenwinkel des Wandlers über einen weiten Strombereich zu groß wurde.

Beispiel 3: Rascherstarrtes Band der Zusammensetzung $Fe_{73,5}Cu_1Nb_3Si_{15,5}B_7$ wurde auf die Breite 6 mm geschnitten, mit MgO schutzisoliert und spannungsfrei zu einem Ringbandkern mit geringem Verhältnis $D_a/D_i$ der Abmessung 23,3 x 20,8 x 6,2 (Füllfaktor 80 %) gewickelt. Dieser 3,16 g schwere Kern wurde anschließend in einem waagerechten Durchlaufofen gemäß Fig. 3 getempert, wobei die gesamte Temperzeit 43 min betrug. Als Unterlage wurde eine 4 mm dicke Kupferplatte verwendet. Dabei stieg die Temperatur von 440°C in der Kristallisationszone langsam bis 568°C in der Reifungszone an und wurde dort für 20 min konstant gehalten. Die Permeabilität des in Fig. 7 (*Kurve 13*) dargestellten Werkstoffes lag bei $\mu_4$ = 276.000. Der Kern wurde durch eine Kunstharzbeschichtung spannungsfrei fixiert und gemäß Fig. 4 mit einer Sekundärwindung von $N_{sec}$ = 2500 bewickelt und gemäß Fig. 5 mit einem Bürdenwiderstand von 12,5 Ω beschaltet. Der resultierende Stromwandler war für einen Nennstrom von 60 A gut geeignet, wobei aufgrund der hohen Sättigungsinduktion von $B_s$ = 1,22 T der maximal abbildbare Strombereich bei 129 A lag. Wie anhand von Fig. 9a (*Kurve 23*) nachvollziehbar ist, liegt der maximale Phasenfehler φ bei 0,17 °.

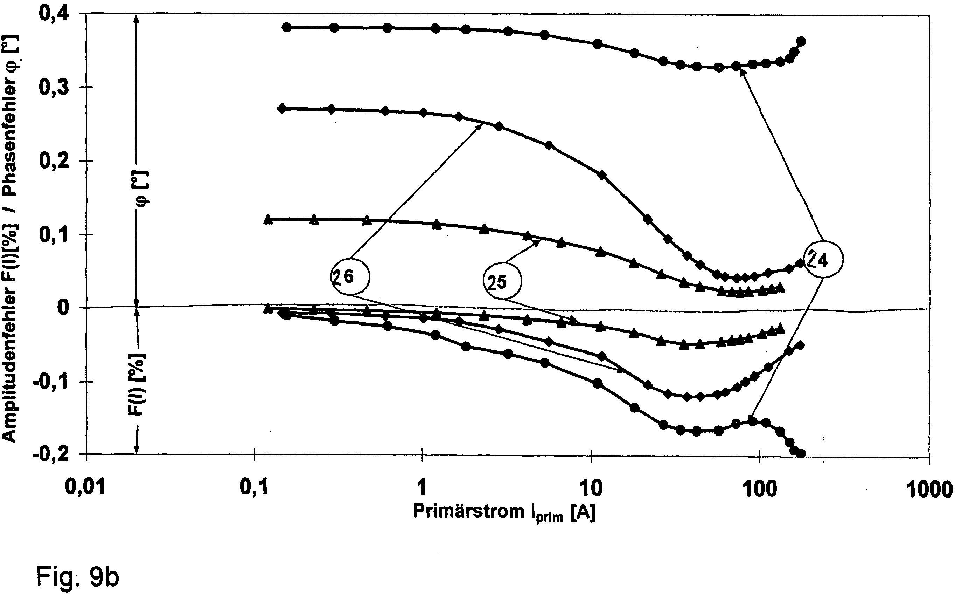

Beispiel 4: Aus derselben Legierung wurde ein Kern mit den Maßen 47 x 38 x 5 mm gewickelt. Die Wärmebehandlung wurde allerdings per Stapelglühung in einem Retortenofen durchgeführt, wobei die Wärmebehandlung zur Gefügereifung und zum Abgleich der Magnetostriktion für 1 Stunde bei 567 °C durchgeführt wurde. Allerdings wurde zur Vermeidung einer exothermen Überhitzung zwischen 440°C und 500 °C extrem langsam mit 0,1 °C/min aufgeheizt. Dadurch dauerte die gesamte Wärmebehandlung ca. 16 Stunden und war sehr unwirtschaftlich. Aufgrund mechanischer Drücke der Kernstapel im Retortenofen erhielt der aufgrund seiner Geometrie mechanisch sehr instabile Kern die in Fig. 8b dargestellte Deformation. Die Permeabilität war aufgrund dieser Schädigung und des magnetostatischen Stapeleffektes sehr niedrig und lag gemäß Fig. 7 (*Kurve 14*) bei $\mu 4$ = 77.000. Damit war dieser Kern schlechter als der kristalline Stand der Technik und wurde verworfen, da der Phasenfehler $\varphi$ gemäß Fig. 9b (*Kurve 24*) zu groß wurde.

Beispiel 5: Rascherstarrtes Band der Zusammensetzung $Fe_{73,5}CU_1Nb_3Si_{14}B_{8,5}$ wurde auf die Breite 6 mm geschnitten, mit MgO schutzisoliert und spannungsfrei zu einem Ringbandkern mit geringem Verhältnis $D_a/D_i$ der Abmessung 23,3 x 20,8 x 6,2 (Füllfaktor 80 %) gewickelt. Dieser 3,16 g schwere Kern wurde anschließend in einem waagerechten Durchlaufofen gemäß Fig. 3 getempert, wobei die gesamte Temperzeit 55 min betrug. Als Unterlage wurde eine 8 mm dicke Kupferplatte verwendet. Dabei betrug die Temperatur in der Kristallisationszone 462°C und in der Reifungszone 556°C. Die Permeabilität des in Fig. 7 in *Kurve 15* dargestellten Werkstoffes lag bei $\mu_4$ = 303.000. Der Kern wurde im Kunststofftrog verkapselt, gemäß Fig. 4 mit einer Sekundärwindung von $N_{sec}$ = 2500 bewickelt und gemäß Fig. 5 mit einem Bürdenwiderstand von 12,5 $\Omega$ beschaltet. Der resultierende Stromwandler war für einen Nennstrom von 60 A gut geeignet, wobei aufgrund der hohen Sättigungsinduktion von $B_s$ = 1,22 T der maximal abbildbare Strombereich bei 132 A lag. Wie anhand von Fig. 9b (*Kurve 25*) nachvollziehbar ist, liegt der Phasenfehler $\varphi$ bei maximal 0,12 °.

Beispiel 6: Rascherstarrtes Band der Zusammensetzung $Fe_{73,5}Cu_1Nb_3Si_{14}B_{8,5}$ wurde auf die Breite 6 mm geschnitten, mit MgO schutzisoliert und wie in den Beispielen 2 und 4 spannungsfrei zu einem Ringbandkern mit geringem Verhältnis $D_a/D_i$ derselben Abmessung 47 x 38 x 5 (Füllfaktor 80 %) gewickelt. Dieser wurde anschließend in einem waagerechten Durchlaufofen gemäß Fig. 3 getempert, wobei die gesamte Temperzeit 180 min betrug. Als Unterlage wurde eine 2 mm dicke Kupferplatte verwendet. Dabei betrug die Temperatur in der Kristallisationszone 455°C und in der Reifungszone, die in 150 Minuten durchfahren wurde, 545 °C. Die Permeabilität des in Fig. 7 als Kurve 16 dargestellten Werkstoffes lag bei $\mu_4$ = 160.000. Wie Fig. 8a zeigt, behielt dieser Kern nach der Durchlaufglühung seine runde Form.

Der Kern wurde mit einer dünnen Kunststoffschicht im CVD-Verfahren ummantelt und gemäß Fig. 4 mit einer Sekundärwindung von $N_{sec}$ = 2500 bewickelt und gemäß Fig. 5 mit einem Bürdenwiderstand von 12,5 Q beschaltet. Der resultierende Stromwandler war für einen Nennstrom von 60 A gut geeignet, wobei aufgrund der hohen Sättigungsinduktion von $B_s$ = 1,3 T der maximal abbildbare Strombereich bei 172 A lag. Wie anhand von Fig. 9b (*Kurve 26*) nachvollziehbar ist, liegt der Phasenfeh-ler $\varphi$ bei max. 0,27 °.

Beispiel 7: Rascherstarrtes Band der Zusammensetzung $Fe_{73,5}Cu_1Nb_3Si_{14}B_{8,5}$ wurde auf die Breite 6 mm geschnitten, mit MgO schutzisoliert und wie in den Beispielen 2 und 4 spannungsfrei zu einem Ringbandkern mit geringem Verhältnis $D_a/D_i$ derselben Abmessung 47 x 38 x 5 (Füllfaktor 80 %) gewickelt. Dieser wurde anschließend in einem waagerechten Durchlaufofen gemäß Fig. 3 getempert. Als Unterlage wurde eine 6 mm dicke Kupferplatte verwendet. Dabei wurde die gesamte Heizzone in 5 Minuten durchfahren. Die eingestellte Temperatur betrug 590 °C. Der Kern behielt die runde Geometrie entsprechend Fig. 8a. Das Permeabilitätsverhalten war mit dem aus Beispiel 6 vergleichbar.

Der Kern wurde durch Tränkung mit Epoxyharz fixiert und wie in Beispiel 6 zum Stromwandler weiterverarbeitet. Entsprechend waren die Stromwandlerdaten mit denen aus Beispiel 6 vergleichbar.

**Patentansprüche**

1. Stromwandlerkern mit einem Verhältnis von Kernaußendurchmesser $D_a$ zu Kerninnendurchmesser $D_i$ < 1,25, einer Sättigungsmagnetostriktion $\lambda_s \leq |4|$ppm, einer runden Hystereseschleife mit $0,50 \leq Br/Bs \leq 0,85$ und einem $H_{cmax} \leq 20$ mA/cm, wobei der Stromwandlerkern aus einer weichmagnetischen Eisen-Basis-Legierung besteht, bei der mindestens 50% der Legierungsstruktur von feinkristallinen Teilchen mit einer mittleren Teilchengröße von 100 nm oder weniger eingenommen werden, und die Eisen-Basis-Legierung im wesentlichen eine Zusammensetzung aufweist:

$$Fe_{x-a-b}CO_aNi_bCu_yM_zSi_vB_w$$

wobei M ein Element aus der Gruppe V, Nb, W, Ta, Zr, Hf, Ti, Mo oder eine Kombination aus diesen ist und zusätzlich gilt:

X+Y+Z+V+W=100 % mit

Fe+Co+Ni = x =100%-y-z-v-w

| Co | $a \leq 1,5$ at % |
|----|----|
| Ni | $b \leq 1,5$ at % |
| Cu | $0\ y \leq 2$ at % |
| M | $z \leq 5$ at % |
| Si | $6,5 \leq v \leq 18$ at % |
| B | $5 \leq w \leq 14$ at % |

wobei v+w > 18 at %.

2. Stromwandlerkern nach Anspruch 1, mit einer Sättigungsmagnetostriktion $\lambda \leq |2|$ppm, einer runden Hystereseschleife mit $0,50 \leq Br/Bs \leq 0,85$ und einem $H_{cmax} \leq 10$ mA/cm, wobei der Stromwandlerkern aus einer weichmagnetischen Eisen-Basis-Legierung besteht, bei der mindestens 50% der Legierungsstruktur von feinkristallinen Teilchen mit einer mittleren Teilchengröße von 100 nm oder weniger eingenommen werden, und die Eisen-Basis-Legierung im wesentlichen eine Zusammensetzung aufweist:

$$Fe_{x-a-b}CO_aNi_bCu_yM_zSi_vB_w$$

wobei M ein Element aus der Gruppe V, Nb, W, Ta, Zr, Hf, Ti, Mo oder eine Kombination aus diesen ist und zusätzlich gilt:

x+y+z+v+w=100 % mit
Fe+Co+Ni = x = 100%-y-z-v-w

| Co | $a \leq 0,5$ at % |
|----|----|
| Ni | $b \leq 0,5$ at % |
| Cu | $0,75\ 9\ y \leq 1,25$ at % |
| M | $2,0 \leq z \leq 3,5$ at % |
| Si | $13 \leq v \leq 16,5$ at % |
| B | $5 \leq w \leq 9$ at % |

wobei $20 \leq v+w \leq 25$ at %.

3. Stromwandlerkern nach Anspruch 2, mit einer Sättigungsmagnetostriktion $\lambda_s \leq |0,8|$ ppm, einer runden Hystereseschleife mit $0,65 \leq Br/Bs \leq 0,80$ und einem $H_{cmax} \leq 10$ mA/cm, wobei der Stromwandlerkern aus einer weichmagnetischen Eisen-Basis-Legierung besteht, bei der mindestens 50% der Legierungsstruktur von feinkristallinen Teilchen mit einer mittleren Teilchengröße von 100 nm oder weniger eingenommen werden, und die Eisen-Basis-Legierung folgende Stöchiometrie aufweist:

$$Fe_{x-a-b}CO_aNi_bCuyM_zSi_vB_w,$$

wobei M ein Element aus der Gruppe V, Nb, W, Ta, Zr, Hf, Ti, Mo oder eine Kombination aus diesen ist und zusätzlich gilt:

x+y+z+v+w=100 % mit
Fe+Co+Ni = x = 100%-y-z-v-w

| Co | $a \leq 0,5$ at % |
|----|----|
| Ni | $b \leq 0,5$ at % |
| Cu | $0,75 \leq y \leq 1,25$ at % |
| M | $2,0 \leq z \leq 3,5$ at % |

(fortgesetzt)

| | |
|---|---|
| Si | $13 \leq v \leq 16{,}5$ at % |
| B | $5 \leq w \leq 9$ at % |

wobei $20 \leq v+w \leq 25$ at %.

4. Stromwandlerkern nach einem der Patentansprüche 1 bis 3 mit einem $\mu 4 > 90.000$.

5. Stromwandlerkern nach einem der Patentansprüche 1 bis 3 mit einem $\mu_{max} > 350000$.

6. Stromwandlerkern nach einem der Patentansprüche 1 bis 3 mit einer Sättigungsinduktion $B_s \leq 1{,}4$ Tesla.

7. Stromwandlerkern nach Anspruch 6 mit einer Sättigungsinduktion Bs von 1,1 bis 1,4 Tesla.

8. Stromwandlerkern nach einem der Ansprüche 1 bis 3 für einen Stromwandler mit einem Phasenfehler $< 1°$.

9. Stromwandlerkern nach einem der Ansprüche 1 bis 3 mit einer magnetischen Gesamtanisotropie entsprechend $K_{ges} < 2$ J/m$^3$.

10. Stromwandler mit einem Stromwandlerkern nach einem der Ansprüche 1 bis 3, wobei der Stromwandlerkern als Ringbandkern mit mindestens einer Primärwicklung und mindestens einer Sekundärwicklung ausgebildet ist.

11. Verfahren zur Herstellung von ringförmigen Stromwandlerkernen bestehend aus einer weichmagnetischen Eisen-Basis-Legierung, wobei mindestens 50% des Volumens der Legierungsstruktur von feinkristallinen Teilchen mit einer mittleren Teilchengröße von 100 nm oder weniger eingenommen wird, mit folgenden schritten:

   a) Bereitstellen einer Legierungsschmelze;
   b) Herstellung eines amorphen Legierungsbandes aus der Legierungsschmelze mittels Rascherstarrungstechnologie;
   c) Spannungsfreies Wickeln des amorphen Bandes zu amorphen Stromwandlerkernen;
   d) Wärmebehandlung der ungestapelten amorphen Stromwandlerkerne im Durchlauf zu nanokristallinen Stromwandlerkernen unter weitestgehendem Ausschluss des Einflusses von Magnetfeldern,

   wobei die ringförmigen Stromwandlerkerne mit einem Verhältnis von Kernaußendurchmesser $D_a$ zu Kerninnendurchmesser $D_i < 1{,}25$ hergestellt werden und wobei die Wärmebehandlung in einem Temperaturintervall von ca. 440°C bis ca. 620°C vorgenommen wird, **dadurch gekennzeichnet, dass** bei der Wärmebehandlung in dem Temperaturintervall von 440°C bis 620°C eine erste Aufheizphase und eine zweite Aufheizphase existiert, deren Aufheizrate niedriger ist als die der ersten Aufheizphase.

12. Verfahren nach Anspruch 11, bei dem die Wärmebehandlung in einer inerten Gasatmosphäre durchgeführt wird.

13. Verfahren nach Anspruch 11, bei dem die Wärmebehandlung in einer reduzierenden Gasatmosphäre durchgeführt wird.

14. Verfahren nach einem der Anspruch 11 bis 13, bei dem das amorphe Band vor dem Wickeln elektrisch isolierend beschichtet wird.

15. Verfahren nach einem der Ansprüche 11 bis 14, bei dem der Stromwandlerkern nach dem Wickeln in ein Isolationsmittel eingetaucht wird.

16. Verfahren nach einem der Ansprüche 11 bis 15, bei dem die Wärmebehandlung der ungestapelten amorphen Stromwandlerkerne auf Wärmesenken, die eine hohe Wärmekapazität und eine hohe Wärmeleitfähigkeit aufweisen, erfolgt.

17. Verfahren nach Anspruch 16, bei dem als Material für die Wärmesenken ein Metall oder eine metallische Legierung, ein Metallpulver oder eine Keramik vorgesehen ist.

**18.** Verfahren nach Anspruch 17, bei dem als Metall oder als Metallpulver Kupfer, Silber oder ein wärmeleitfähiger Stahl vorgesehen ist.

**19.** Verfahren nach Anspruch 17, bei dem als Material für die Wärmesenken ein keramisches Pulver vorgesehen ist.

**20.** Verfahren nach Anspruch 17 oder 19, bei dem als Keramik oder keramisches Pulver Magnesiumoxid, Aluminiumoxid oder Aluminiumnitrid vorgesehen ist.

**21.** Verfahren nach einem der Ansprüche 13 bis 16, bei dem die Verweildauer in der Gesamtheit der Glühzonen zwischen 5 und 180 Minuten beträgt.

**Claims**

**1.** A current transformer core with a ratio of core outer diameter $D_a$ to core inner diameter $D_i < 1.25$, a saturation magnetostriction $\lambda_s \leq |4|$ ppm, a round hysteresis loop with $0.50 \leq Br/Bs \leq 0.85$ and an $H_{cmax} \leq 20$ mA/cm, wherein the current transformer core consists of a soft magnetic iron-based alloy, in which at least 50% of the alloy structure is taken up by fine crystalline particles with a mean particle size of 100 nm or less and the iron-based alloy substantially has the composition of:

$$Fe_{x-a-b}CO_aNi_bCu_yM_zSi_vB_w$$

wherein M is an element from the group V, Nb, W, Ta, Zr, Hf, Ti, Mo or a combination of them and additionally the following applies:

x+y+z+v+w=100 % with
Fe+Co+Ni = x = 100%-y-z-v-w

| | |
|---|---|
| Co | $a \leq 1.5$ at % |
| Ni | $b \leq 1.5$ at % |
| Cu | $0.5 \leq y \leq 2$ at % |
| M | $z \leq 5$ at % |
| Si | $6.5 \leq v \leq 18$ at % |
| B | $5 \leq w \leq 14$ at % |

wherein v+w > 18 at %.

**2.** A current transformer core as claimed in Claim 1 with a saturation magnetostriction $\lambda_s \leq |2|$ ppm, a round hysteresis loop with $0.50 \leq Br/Bs \leq 0.85$ and an $H_{cmax} \leq 10$ mA/cm, wherein the current transformer core consists of a soft magnetic iron-based alloy, in which at least 50% of the alloy structure is taken up by fine crystalline particles with a mean particle size of 100 nm or less and the iron-based alloy substantially has the composition of:

$$Fe_{x-a-b}Co_aNi_bCu_yM_zSi_vB_w,$$

wherein M is an element from the group V, Nb, W, Ta, Zr, Hf, Ti, Mo or a combination of them and additionally the following applies:

x+y+z+v+w=100 % with
Fe+Co+Ni = x = 100%-y-z-v-w

| | |
|---|---|
| Co | $a \leq 0.5$ at % |
| Ni | $b \leq 0.5$ at % |
| Cu | $0.75 \leq y \leq 1.25$ at % |
| M | $2.0 \leq z \leq 3.5$ at% |
| Si | $13 \leq v \leq 16.5$ at% |
| B | $5 \leq w \leq 9$ at % |

wherein $20 \leq v+w \leq 25$ at %.

3. A current transformer core as claimed in Claim 2 with a saturation magnetostriction $\lambda_s \leq |0.8|$ ppm, a round hysteresis loop with $0.65 \leq Br/Bs \leq 0.80$ and an $H_{cmax} \leq 10$ mA/cm, wherein the current transformer core consists of a soft magnetic iron-based alloy, in which at least 50% of the alloy structure is taken up by fine crystalline particles with a mean particle size of 100 nm or less and the iron-based alloy has the following stoichiometry:

$$Fe_{x-a-b}Co_aCu_yM_zSi_vSi_vB_w$$

wherein M is an element from the group V, Nb, W, Ta, Zr, Hf, Ti, Mo or a combination of them and additionally the following applies:

x+y+z+v+w=100% with
Fe+Co+Ni = x = 100%-y-z-v-w

| | |
|---|---|
| Co | $a \leq 0.5$ at % |
| Ni | $b \leq 0.5$ at % |
| Cu | $0.75 \leq y \leq 1.25$ at % |
| M | $2.0 \leq z \leq 3.5$ at % |
| Si | $13 \leq v \leq 16.5$ at% |
| B | $5 \leq w \leq 9$ at % |

wherein $20 \leq v+w \leq 25$ at %.

4. A current transformer core as claimed in one of Claims 1 to 3 with a $\mu_4 > 90{,}000$.

5. A current transformer core as claimed in one of Claims 1 to 3 with a $\mu_{max} > 350{,}000$.

6. A current transformer core as claimed in one of Claims 1 to 3 with a saturation induction $B_s \leq 1.4$ Tesla.

7. A current transformer core as claimed in Claim 6 with a saturation induction $B_s$ of 1.1 to 1.4 Tesla.

8. A current transformer core as claimed in one of Claims 1 to 3 for a current transformer with a phase difference < 1°.

9. A current transformer core as claimed in one of Claims 1 to 3 with a magnetic overall anisotropy corresponding to $K_{ges} < 2$ J/m$^3$.

10. A current transformer with a current transformer core as claimed in one of Claims 1 to 3, wherein the current transformer core is constructed in the form of an annular strip core with at least one primary winding and at least one secondary winding.

11. A method of manufacturing annular current transformer cores consisting of a soft magnetic iron-based alloy, wherein at least 50% of the volume of the alloy structure is taken up by fine crystalline particles with a mean particle size of 100 nm or less, with the following steps:

a) providing a molten alloy;
b) producing an amorphous alloy strip from the molten alloy by means of rapid solidification technology;
c) stress-relieved winding of the amorphous strip to form amorphous current transformer cores;
d) continuous heat treatment of the unstacked amorphous current transformer cores to form nanocrystalline current transformer cores whilst excluding the influence of magnetic fields to the greatest possible extent, wherein the annular current transformer cores are produced with a ratio of core outer diameter $D_a$ to core inner diameter $D_i$ < 1.25 and wherein the heat treatment is effected in a temperature range of ca. 440°C to ca. 620°C, **characterised in that** in the heat treatment in the heat range of 400°C to 620°C there is a first heating phase and a second heating phase whose heating rate is lower than that of the first heating phase.

12. A method as claimed in Claim 11, in which the heat treatment is performed in an inert gas atmosphere.

**13.** A method as claimed in Claim 11, in which the heat treatment is performed in a reducing gas atmosphere.

**14.** A method as claimed in one of Claims 11 to 13, in which the amorphous strip is provided with an electrically insulating coating before being wound.

**15.** A method as claimed in one of Claims 11 to 14, in which the current transformer core is dipped in an insulating agent after being wound.

**16.** A method as claimed in one of Claims 11 to 15, in which the heat treatment of the unstacked amorphous current transformer cores is effected on heat sinks, which have a high thermal capacity and a high thermal conductivity.

**17.** A method as claimed in Claim 16, in which a metal or a metallic alloy, a metal powder or a ceramic is provided as the material for the heat sinks.

**18.** A method as claimed in Claim 17, in which copper, silver or a heat-conductive steel is provided as the metal or metal powder.

**19.** A method as claimed in Claim 17, in which a ceramic power is provided as the material for the heat sinks.

**20.** A method as claimed in Claim 17 or 19, in which magnesium oxide, aluminium oxide, or aluminium nitride is provided as the ceramic or ceramic powder.

**21.** A method as claimed in one of Claims 13 to 16, in which the residence period in all of the annealing zones is between 5 and 180 minutes.

**Revendications**

**1.** Noyau de transformateur de courant ayant un rapport du diamètre externe du noyau $D_a$ au diamètre interne du noyau $D_i$ < 1,25 , une magnétostriction à saturation $\lambda_s$ |4| ppm, une boucle d'hystérésis ronde avec $0,50 \leq Br/Bs \leq 0,85$ et un $H_{cmax} \leq 20$ mA/cm, ce noyau de transformateur de courant étant constitué par un alliage à base de fer magnétique doux dans lequel au moins 50 % de la structure de l'alliage est occupée par des particules de fins cristaux ayant une granulométrie moyenne de 100 nm ou moins, et l'alliage à base de fer ayant essentiellement la composition suivante :

$$Fe_{x-a-b}Co_aNi_bCu_yM_zSi_vB_w$$

dans laquelle M représente un élément du groupe V, Nb, W, Ta, Zr, Hf, Ti, Mo ou une combinaison de ces éléments, et étant en outre précisé que :

x+y+z+v+w = 100 % avec
Fe+Co+Ni = x = 100 % -y-z-v-w

| | |
|---|---|
| Co | $a \leq 1,5$ at % |
| Ni | $b \leq 1,5$ at % |
| Cu | $0,5 \leq y \leq 2$ at% |
| M | $z \leq 5$ at % |
| Si | $6,5 \leq v \leq 18$ at% |
| B | $5 \leq w \leq 14$ at % |

v+w>18 at %

**2.** Noyau de transformateur de courant conforme à la revendication 1, ayant une magnétostriction à saturation $\lambda_s \leq$ |2| ppm, une boucle d'hystérésis ronde avec $0,50 \leq Br/Bs \leq 0,85$ et un $H_{cmax} \leq 10$ mA/cm, ce noyau de transformateur de courant étant constitué d'un alliage à base de fer magnétique doux dans lequel au moins 50 % de la structure de l'alliage est occupée par des particules de fins cristaux ayant une granulométrie moyenne de 100 nm ou moins, et l'alliage à base de fer présentant essentiellement la composition suivante :

$$F_{ex-a-b}Co_aNi_bCu_yM_zSi_vB_w$$

dans laquelle M représente un élément du groupe V, Nb, W, Ta, Zr, Hf, Ti, Mo ou une combinaison de ces éléments, et étant en outre précisé que :

x+y+z+v+w = 100 % avec
Fe+Co+Ni = x = 100 % -y-z-v-w

| | | |
|---|---|---|
| Co | $a \leq 0,5$ at % | |
| Ni | $b \leq 0,5$ at % | |
| Cu | $0,75 \leq y \leq 1,25$ at % | |
| M | $2,0 \leq z \leq 3,5$ at % | |
| Si | $13 \leq v \leq 16;5$ at % | |
| B | $5 \leq w \leq 9$ at % | |

$20 \leq v+w > 25$ at %

3. Noyau de transformateur de courant conforme à la revendication 2, ayant une magnétostriction à saturation $\lambda s \leq |0,8|$ ppm, une boucle d'hystérésis ronde avec $0,65 \leq Br/Bs \leq 0,80$ et un $H_{cmax} \leq 10$ mA/cm, ce noyau de transformateur de courant étant constitué d'un alliage à base de fer magnétique doux dans lequel au moins 50 % de la structure de l'alliage est occupée par des particules de fins cristaux ayant une granulométrie moyenne de 100 nm ou moins, et, l'alliage à base de fer présentant la stoechiométrie suivante :

$$Fe_{x-a-b}Co_aNi_bCu_yM_zSi_vB_w$$

dans laquelle M représente un élément du groupe V, Nb, W, Ta, Zr, Hf, Ti, Mo ou une combinaison de ces éléments, et étant en outre précisé que :

x+y+z+v+w = 100 % avec
Fe+Co+Ni = x = 100 % -y-z-v-w

| | | |
|---|---|---|
| Co | $a \leq 0,5$ at % | |
| Ni | $b \leq 0,5$ at % | |
| Cu | $0,75 \leq y \leq 1,25$ at % | |
| M | $2,0 \leq z \leq 3,5$ at % | |
| Si | $13 \leq v \leq 16,5$ at % | |
| B | $5 \leq w \leq 9$ at % | |

$20 \leq v+w > 25$ at %

4. Noyau de transformateur de courant conforme à l'une des revendications 1 à 3, ayant un $\mu_4 > 90.000$.

5. Noyau de transformateur de courant conforme à l'une des revendications 1 à 3, ayant un $\mu_{max} > 350.000$.

6. Noyau de transformateur de courant conforme à l'une des revendications 1 à 3, ayant une induction de saturation $B_s \leq 1,4$ Tesla.

7. Noyau de transformateur de courant conforme à la revendication 6, ayant une induction de saturation $B_s$ de 1,1 à 1,4 Tesla.

8. Noyau de transformateur de courant conforme à l'une des revendications 1 à 3, pour un transformateur de courant ayant un défaut de phase < 1°.

9. Noyau de transformateur de courant conforme à l'une des revendications 1 à 3, ayant une anisotropie magnétique globale correspondant à $K_{ges} < 2$ J/m$^3$.

**10.** Transformateur de courant ayant un noyau de transformateur de courant conforme à l'une des revendications 1 à 3, ce noyau de transformateur de courant étant réalisé sous la forme d'un noyau à bande annulaire ayant au moins un enroulement primaire et au moins un enroulement secondaire.

**11.** Procédé d'obtention d'un noyau de transformateur de courant annulaire constitué d'un alliage à base de fer magnétique doux, au moins 50 % du volume de la structure de cet alliage étant occupée par des particules de fins cristaux ayant une granulométrie moyenne de 100 nm ou moins, comportant les étapes suivantes :

a) préparation d'une masse d'alliage en fusion,
b) préparation d'une bande d'alliage amorphe à partir de la masse d'alliage en fusion par la technologie de solidification rapide,
c) enroulement de la bande amorphe sans la soumettre à une tension pour obtenir des noyaux de transformateurs de courant amorphes,
d) traitement thermique des noyaux de transformateurs de courant amorphes non empilés en continu pour obtenir des noyaux de transformateurs de courant nanocristallins, le plus largement possible sans influence de champs magnétiques,
les noyaux de transformateurs de courant annulaires étant obtenus avec un rapport du diamètre externe du noyau $D_a$ au diamètre interne du noyau $D_i$ < 1,25 et le traitement thermique étant mis en oeuvre dans une plage de température d'environ 440°C à environ 620°C,
**caractérisé en ce que**
le traitement thermique dans la plage de températures de 440°C à 620°C, comporte une première phase de chauffage, et une seconde phase de chauffage dans laquelle la vitesse de chauffage est plus faible que dans la première phase de chauffage.

**12.** Procédé conforme à la revendication 11, selon lequel le traitement thermique est effectué sous une atmosphère gazeuse inerte.

**13.** Procédé conforme à la revendication 11, selon lequel le traitement thermique est effectué sous une atmosphère gazeuse réductrice.

**14.** Procédé conforme à l'une des revendications 11 à 13, selon lequel la bande amorphe est équipée d'un revêtement électriquement isolant avant son enroulement.

**15.** Procédé conforme à l'une des revendications 11 à 14, selon lequel le noyau de transformateur de courant est plongé dans un milieu isolant après son enroulement.

**16.** Procédé conforme à l'une des revendications 11 à 15, selon lequel le traitement thermique des noyaux de transformateurs de courant amorphes non empilés s'effectue sur des dissipateurs de chaleur présentant une capacité calorifique élevée et une conductibilité thermique élevée.

**17.** Procédé conforme à la revendication 16, selon lequel, en tant que matériau de dissipation thermique on met en oeuvre un métal ou un alliage métallique, une poudre métallique ou une céramique.

**18.** Procédé conforme à la revendication 17, selon lequel en tant que métal ou poudre métallique on utilise du cuivre, de l'argent ou un acier conducteur de la chaleur.

**19.** Procédé conforme à la revendication 17, selon lequel en tant que matériau de dissipation thermique on utilise une poudre céramique.

**20.** Procédé conforme à la revendication 17 ou 19, selon lequel, en tant que céramique ou poudre céramique on utilise de l'oxyde de magnésium, de l'oxyde d'aluminium ou du nitrure d'aluminium.

**21.** Procédé conforme à l'une des revendications 13 à 16, selon lequel le temps de séjour dans la totalité des zones de calcination est compris entre 5 et 180 minutes.

Fig. 1

Fig. 2

Fig. 3

Fig. 4

Fig. 5

$N_{prim}$ : 1...6

$I_{prim}$ : 5 $A_{eff}$ ...120 $A_{eff}$ (max.)

$N_{sec}$ : 500...4000

$i_{sec} \approx - i_{prim} * N_{prim} / N_{sec}$

$R_B$ : 1 $\Omega$ ... 200 $\Omega$ (Bürde)

$R_{cu}$ : 1 $\Omega$ ... 200 $\Omega$ (Wicklung)

$U_{signal}$ : 300 $mV_{eff}$ (max.)

Frequenz : 50 / 60 Hz

Fig. 6

Fig. 7

Fig. 8 a

Fig. 8 b

Fig. 8 c

25

Fig. 9a

Fig. 9b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0504674 B1
- EP 0271657 B1
- WO 03007316 A2
- EP 0299498 B1
- US 5911840 A
- JP 03146615 A

### In der Beschreibung aufgeführte Nicht-Patentliteratur

- **G. HERZER.** *IEEE Transactions on Magnetics,* 1989, vol. 25, 3327 ff